Europäisches Patentamt

European Patent Office

Office européen des brevets

(11) Veröffentlichungsnummer: **0 277 277**
**B1**

(12) **EUROPÄISCHE PATENTSCHRIFT**

(45) Veröffentlichungstag der Patentschrift:
01.08.90

(51) Int. Cl.⁵: **B65G 17/44**

(21) Anmeldenummer: 87113888.9

(22) Anmeldetag: 23.09.87

(54) Rundstahlkette mit Bügeln zum Anbringen von Förderelementen (Bechern).

(30) Priorität: 23.01.87 DE 3701979

(43) Veröffentlichungstag der Anmeldung:
10.08.88 Patentblatt 88/32

(45) Bekanntmachung des Hinweises auf die Patenterteilung:
01.08.90 Patentblatt 90/31

(84) Benannte Vertragsstaaten:
AT BE CH DE ES FR GB GR IT LI LU NL SE

(56) Entgegenhaltungen:
AT-B- 206 358
AT-B- 346 767

(73) Patentinhaber: Kettenwerk Wickede-Ruhr GmbH,
Eisenbahnstrasse 2, D-5757 Wickede-Ruhr(DE)

(72) Erfinder: Kobeloer Egon, Schledornweg 5, 5757 Wickede
/ Ruhr(DE)

(74) Vertreter: Fritz, Herbert, Dipl.-Ing., Mühlenberg 74,
D-5760 Arnsberg 1(DE)

## Beschreibung

Die Erfindung bezieht sich auf eine Rundstahlkette mit Bügeln zum Anbringen von Förderelementen mit den Merkmalen nach dem Oberbegriff des Hauptanspruches (siehe z.B. AT-B 346 767).

An jedem Bügel kann zum Beispiel ein Förderbecher, ein Kratzeisen oder ein anderes Mitnehmerelemente angebracht werden. Dabei werden zwei parallele Gewindebolzen des Bügels durch Bohrungen in der Becherwand gesteckt und durch Muttern festgeschraubt. Der Bügel ist durch eine kraftschlüssig verbundene Lasche geschlossen, die als Anlage eines Förderelements dient.

Bei einem bekannten Kettenbügel für eine Rundstahlkette der gleichen Art (AT-B 206 358, Fig. 2 bis 4) sind im Ansatz an die zur Verschraubung dienenden Gewindebolzen konusförmige Ansätze gebildet, die in konusförmige Bohrungen der Schließlasche eingreifen. Der Kraftfluß zwischen Bügel und Schließlasche hängt davon ab, ob die Muttern fest angezogen sind. Im Falle, daß sich diese durch Vibrationen während des Betriebs lockern, wird der Kraftfluß beeinträchtigt, so daß der Bügel überlastet wird, deformiert werden kann, die Gewindeverbindungen eine zusätzliche Belastung erhalten, was letztlich sogar eine vollständige Öffnung des Kettenbügels zur Folge haben kann.

Bei gleichfalls bekannten Kettenbügeln (AT-B 346 767) sind Bügel und Schließlasche durch Schweißen, Aufpressen oder Aufschrumpfen miteinander verbunden, wobei die Lösbarkeit im Bedarfsfall preis gegeben wird. Die Einheit Bügel/Schließlasche muß zerstört werden, wenn eine Entnahme aus dem Kettenstrang erfolgen soll. Im übrigen wird durch die Schweißverbindung auch die Festigkeit der vorher vergüteten Elemente beeinträchtigt. Weiter ist (AT-B 346 767 Fig. 4 und 5) ein Kettenbügel bekannt, dessen offene Seite durch einen Stab geschlossen ist, der nach Art von Gelenken mit durchgesteckten Steckbolzen mit vorstehenden Ansätzen des Kettenbügels verbunden ist. Der Stab bietet dem anzubringenden Förderorgan nur eine unzureichend breite Anlagefläche, er vermag keine Momente aufzunehmen. Im übrigen ist der Zugang zu dem Bügel durch die angeformten Ansätze in einer Weise beengt, daß die Aufnahme von genormten Rundgliedern in Frage gestellt ist.

Die Aufgabe der Erfindung ist darin zu sehen, einen Bügel für Rundstahlketten jeder Art, geeignet zum Anbringen von Förderelementen so auszubilden, daß auch eine Lockerung der lösbaren Schraubverbindung zwischen Bügel und Förderelement den Kraft- und Momentenfluß zwischen Bügel und Lasche nicht beeinträchtigen kann.

Diese Aufgabe wird durch die Merkmale nach dem Hauptanspruch gelöst. Die Unteransprüche haben bevorzugte Ausführungsformen bzw. weitere Ausgestaltungen zum Inhalt.

Bei einer solchen Rundstahlkette sind die zum Anbringen der Förderelemente vorgesehenen Bügel so bemessen, daß die Einheit Bügel/Lasche Kräfte und Momente wie ein geschlossenes Kettenglied aufnehmen kann. Zwischen Bügel und Lasche ist eine lösbare, jedoch starre Steckverbindung hergestellt. Die Querschnitte der zylindrischen Bügelabschnitte sind nicht geringer bemessen als der Bügelquerschnitt selbst. Sind die Steckverbindungen entsprechend tief gewählt, so können die Kräfte in vollem Umfang übertragen werden. Jede Steckverbindung ist durch einen Spannstift derart gesichert, daß sie auch unabhängig von der Schraubverbindung spielfrei wirksam ist. Die Spannstifte werden durch Eigenspannung gehalten, sie können jedoch im Bedarfsfalle mit geeigneten Werkzeugen ohne Zerstörung der Teile herausgenommen werden. Es besteht somit die Möglichkeit, Bügel und Lasche zu trennen, also den Bügel aus dem Kettenstrang herauszunehmen. Bei der Montage können die Kettenstränge zunächst ohne die Förderorgane montiert und auf die Kettenräder aufgelegt werden, man kann die Förderorgane dann nachträglich anbringen. Es ist auch möglich, die Förderorgane ohne Abnahme der Kettenstränge zu entfernen. Die Bügel sind so gestaltet, daß Rundstahl-Kettenglieder mit genormten Abmessungen aufgenommen werden können. Sie können auch Kettenräder stehend und liegend überlaufen.

Gemäß einer bevorzugten Form wird eine Lasche vorgeschlagen, bei welcher ohne Beeinträchtigung der Belastungsaufnahme der Aufwand an Werkstoff minimal ist.

Wenn gemäß dieser Ausgestaltung die eingesteckten zylindrischen Abschnitte des Bügels gegenüber der Lasche überstehend ausgebildet sind, so daß die sich anschließenden Bogenansätze des Bügels frei von der Lasche sind, dann ist es nicht erforderlich an der Lasche Einkerbungen zur Aufnahme dieser Bogenansätze zu bilden.

Die Erfindung bezieht sich weiter auf eine im Hinblick auf die Kraftaufnahme bevorzugte Querschnittsform des Bügels, bei der der Bügelquerschnitt innen halbkreisförmig, außen jedoch flachdachförmig ist. Es ergeben sich dabei im Querschnitt zwischen dem Halbkreis und der flachen Begrenzung beidseitig parallele Flächen, die als Widerlager

für das eingehängte Rundglied zur Verfügung stehen, so daß insbesondere bei Krümmungen die Flächenpressung und somit der Verschleiß geringer wird.

Gemäß einer bevorzugten Ausführungsform ist eine speziell ausgebildete Lasche mit einem zum Bügel hin gerichteten vorstehenden Nocken vorgesehen. Wenn die Kette ein Kettenrad überläuft, und der Bügel liegend einen Zahn des Kettenrades aufnimmt, dann wird ein seitliches Abkippen des Bügels durch die Last des Förderorgans dadurch verhindert, daß sich der Nocken an dem aufgenommenen Zahn abstützt.

Im folgenden werden Ausführungsbeispiele der Erfindung näher beschrieben unter Bezugnahme auf die beiliegenden Zeichnungen.

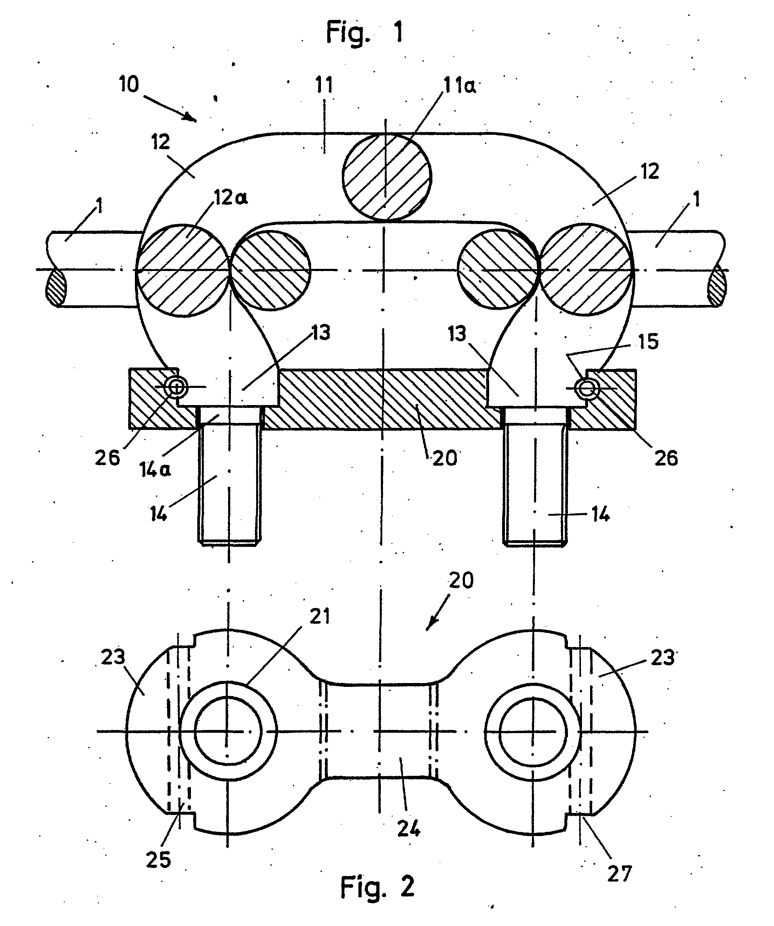

Fig. 1 ist eine Ansicht eines Kettenbügels nach der Erfindung quer zu seiner Ebene, wobei die zugehörige Lasche geschnitten ist;

Fig. 2 ist eine Draufsicht auf die zugehörige Lasche als Einzelteil;

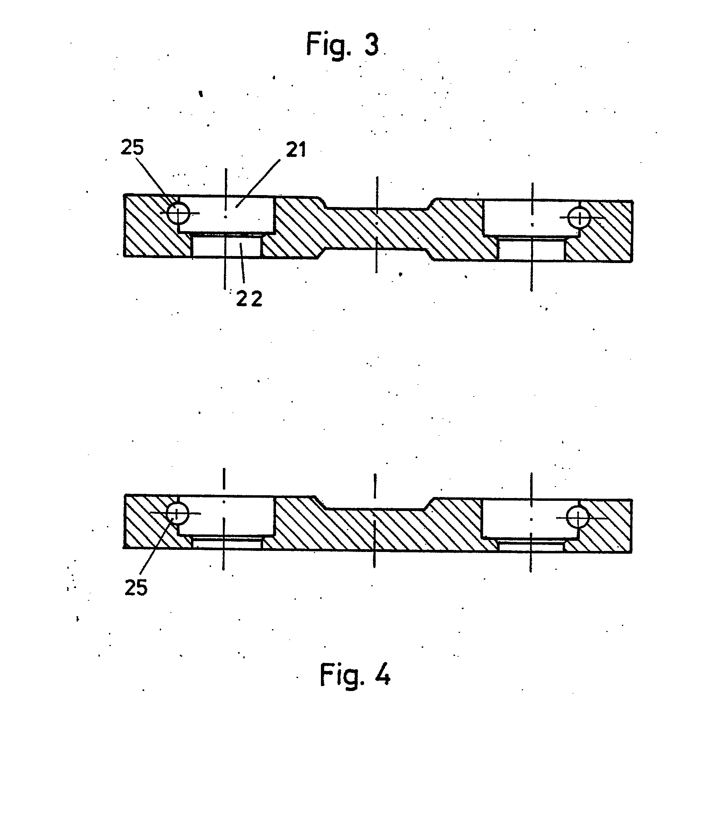

Fig. 3 und 4 zeigen zwei etwas voneinander abweichende, doch im Prinzip gleiche Längsschnitte durch eine Lasche nach Fig. 2;

Fig. 5 ist eine Ansicht eines Kettenbügels mit Lasche gemäß einer Weiterentwicklung;

Fig. 6 ist eine Ansicht dieses Bügels allein;

Fig. 7 ist ein Schnitt nach VII-VII von Fig. 6;

Fig. 8 ist ein Schnitt nach VIII-VIII von Fig. 6;

Fig. 9 ist eine Draufsicht auf die zu dem weiterentwickelten Bügel gehörende Lasche;

Fig.10 ist ein Schnitt nach X-X von Fig. 9;

Fig.11 ist ein Schnitt nach XI-XI von Fig. 9.

Durch einen Bügel 12 werden zwei in einer Ebene liegende Rundglieder 1 einer Rundgliederkette verbunden. Die beiden runden Bügelabschnitte 12 mit den Querschnitten 12a sind verbunden durch einen geraden Bügelabschnitt 11 mit Querschnitt 11a. Die beiden Bügelabschnitte 12 setzen sich fort in zwei parallele, kurze, gerade Abschnitte 13 mit unvermindertem Querschnitt. Die Bügelabschnitte 13 sind in Gestalt von Gewindebolzen 14 mit kleinerem Durchmesser fortgesetzt, wobei im Übergangsbereich zu den Bügelabschnitten 13 gewindelose Ansätze 14a vorgesehen sind.

Zur Verbindung der beiden Bügelabschnitte 13 ist eine Lasche 20 vorgesehen, in der Draufsicht bestehend aus den beiden Augen 23, verbunden durch einen Steg 24. Die Lasche ist bezüglich ihrer belasteten Querschnitte genauso bemessen wie der Bügel, ist also in der Lage, gleichgroße Kräfte aufzunehmen. In den beiden Augen 23 sind, konzentrisch, große Bohrungen 21 gebildet zur Aufnahme der Bügelabschnitte 13. An den beiden großen Bohrungen 21 schließen sich konzentrisch kleinere Bohrungen 22 an, zur Aufnahme der Bügelabschnitte 14a bzw. zum Durchstecken der Gewindebolzen 14. Eine lösbare Fixierung zwischen der Lasche und den Bügelabschnitten 13 ist durch Spannstifte 26 hergestellt, für deren Aufnahme in der Lasche Querbohrungen 25 vorgesehen sind und entsprechende Ausfräsungen 15 in den Bügelabschnitten 13. Bei der Montage der Kette können die Spannstifte 26 herausgenommen werden, so daß die Lasche 20 abgenommen werden kann. Das Förderelement, zum Beispiel der Becher, wird auf die beiden Gewindebolzen 14 aufgesteckt, wobei die Becherwand an der Lasche anliegt.

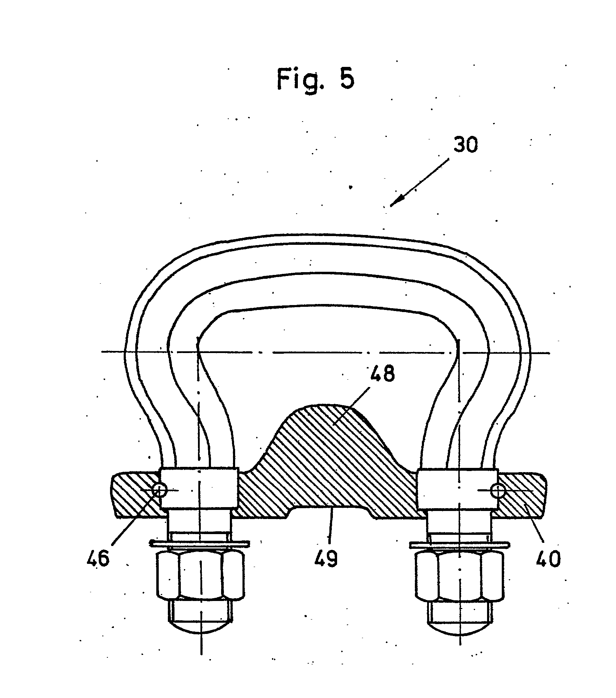

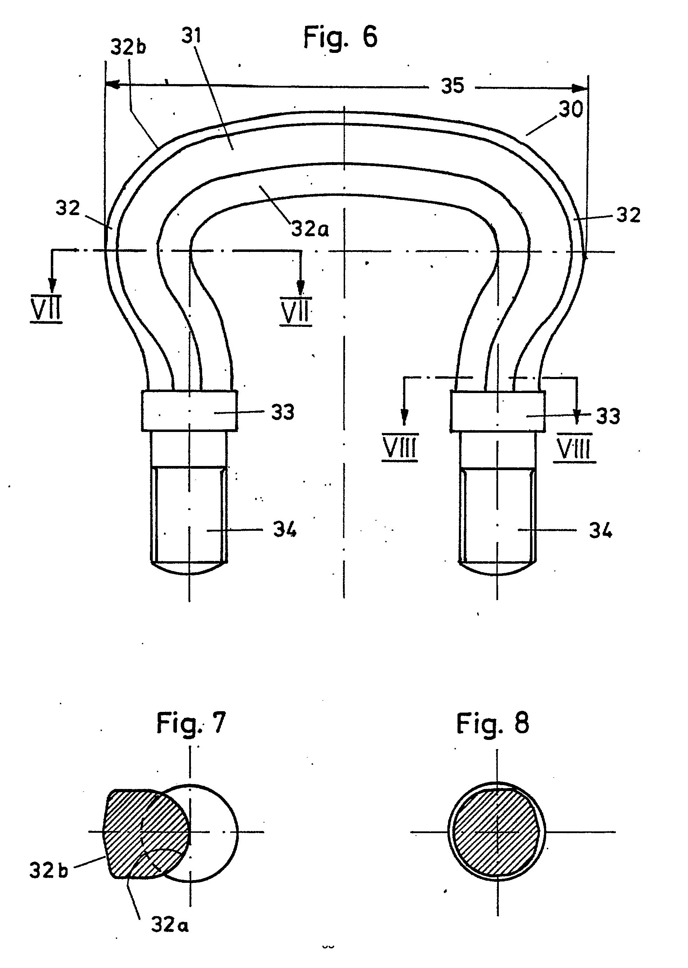

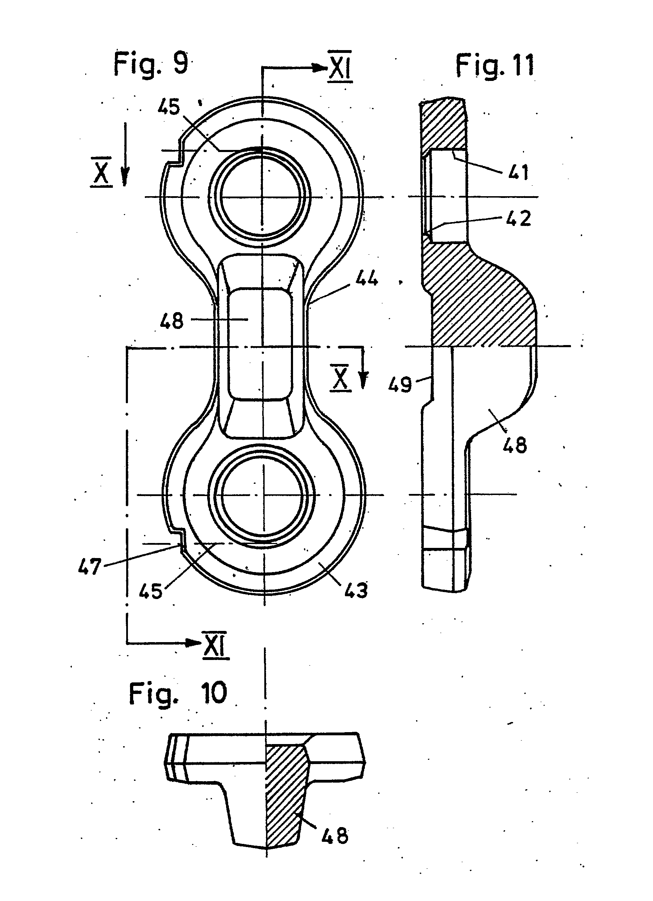

Die Figuren 5 bis 11 betreffen eine weiterentwickelte Ausführungsform. Es ist ein Bügel 30 vorgesehen mit einem flach gewölbten Bügelabschnitt 31 an den sich die stark gewölbten Bügelabschnitte 32 anschließen. Die Abmessungen dieses Bügels, zum Beispiel das Außenmaß 35, sind annähernd gleich mit den Abmessungen der Rundglieder der Kette, in welche der Bügel eingesetzt ist. Der Querschnitt des Bügels im Bereich der Bügelabschnitte 31 und 32 ergibt sich aus Fig. 7. Innenseitig ist der Querschnitt bestimmt durch einen Halbkreis 32a, während die Begrenzung außen herum durch eine flache, ebene oder dachförmige Fläche 32b bestimmt ist.

Die stark gewölbten Bügelabschnitte 32 gehen in die zylindrischen Bügelabschnitte 33, die parallele Achsen haben, über. Dementsprechend ergibt sich bei den stark gewölbten Bügelabschnitten 32 im Übergangsbereich ein angenäherter Kreisquerschnitt gemäß Figur 8. An die zylindrischen Bügelabschnitte 33 schließen sich die Gewindebolzen 34 an.

Die zum Bügel 3o gehörende Lasche 4o hat im Prinzip die gleiche Form wie die Lasche 2o des vorher beschriebenen Ausführungsbeispiels. Zur Aufnahme der zylindrischen Bügelabschnitte 33 und der Gewindebolzen 34 sind in der Lasche zwei große Bohrungen 41 vorgesehen, an die sich jeweils kleine Bohrungen 42 anschließen. Die Bohrungen sind umgeben von den Augen 43, die durch einen schmaleren Steg 44 verbunden sind. Es sind Querbohrungen 45 zur Aufnahme der Spannelemente 46 vorgesehen. Im Eingangsbereich der Querbohrungen 45 sind Absätze 47 gebildet, die ein Verbohren ohne Bohrerverlauf ermöglichen.

Im Bereich des Steges 44 ist ein Stütznocken 48 angeformt, welcher sowohl in der Längsansicht als auch im Querschnitt im Prinzip die Form eines Trapezes hat. Der Stütznocken an der Trag- und Schließlasche dient dazu, einen flach liegenden Kettenbügel auf einem Kettenrad seitlich gegen Verkanten abzustützen. Der Nocken hat insbesondere bei innen verzahnten Antriebsrädern mit flachliegendem Bügel eine Bedeutung.

Gegenüber dem Stütznocken 48 ist an der Lasche 1o eine Vertiefung 49 gebildet. Dadurch soll die Anlage der Lasche an der angeschraubten Wand des Bauteils auf den Bereich der Augen beschränkt werden. Unebenheiten an der Bauteilwand können bei dieser Gestaltung die Festigkeit der Verbindung weniger beeinträchtigen.

Bügel mit der Trag- und Schließlasche können auch als Verbindungselement in zwei oder mehreren Kettensträngen ohne Anbringung sonstiger Bauteile eingesetzt werden und sind somit als Kettenschloß oder Kupplungselement einsetzbar.

Durch die vorbeschriebene Ausführung wird zusätzlich eine wesentliche Montage-, Wartungs- und Unfallsicherheit erreicht, so daß ohne ein Abfangen von Zugkräften in miteinander verbundenen Ketteneinheiten der Austausch von angebauten Bauteilen möglich ist.

**Patentansprüche**

1. Rundstahlkette mit Bügeln zum Anbringen von Förderelementen mit den Merkmalen:

- die zum Anbringen der Förderelemente dienenden Bügel haben einen geraden Abschnitt (11), an den sich, wie bei einem geschlossenen Rundkettenglied, zwei runde Abschnitte (12) anschließen, wobei jedoch die Längsseite gegenüber dem geraden Abschnitt durch eine Lasche (20) geschlossen ist, die als Anlage eines Förderelementes dient;

- zwei gerade, parallele Abschnitte (13) des Bügels als Fortsetzung der runden Abschnitte werden von Bohrungen in der Lasche aufgenommen und sind in Gestalt an der Lasche überstehender Gewindebolzen (14) fortgesetzt, die zum Anschrauben des Förderelementes mittels Muttern dienen;

- die von der Lasche aufgenommenen Bügelabschnitte (13) haben eine zylindrische Form mit einen unverminderten Querschnitt und werden von großen Bohrungen (21) in der Lasche aufgenommen gekennzeichnet durch die nachfolgenden weiteren Merkmale:

– an die großen Bohrungen (21) der Lasche schließen sich kleinere Bohrungen (22) zur Aufnahme der Gewindebolzen an;

– in der Lasche sind zwei Querbohrungen (25) gebildet, die jeweils eine große Bohrung (21) zum Teil durchdringen und die jeweils einen eingespannten Stift (26) aufnehmen, der im Bereich der Durchdringung von einer Ausfräsung (15) des zylindrischen Bügelabschnittes aufgenommen wird.

2. Rundstahlkette nach Anspruch 1, dadurch gekennzeichnet, daß die Lasche (20) konzentrisch um die Bohrungen (21, 22) in Gestalt von Augen (23) ausgebildet ist, die durch einen Steg (24) miteinander verbunden sind.

3. Rundstahlkette nach Anspruch 1, dadurch gekennzeichnet, daß die zylindrischen Abschnitt (33) des Bügels (30) gegenüber der Lasche (40) vorstehen.

4. Rundstahlkette nach Anspruch 1, dadurch gekennzeichnet, daß der Bügel innenseitig durch einen Halbkreisquerschnitt (32a) begrenzt ist, während die Begrenzung (32b) außenseitig flach, eben oder dachförmig ausgebildet ist.

5. Rundstahlkette nach Anspruch 1, dadurch gekennzeichnet, daß im Bereich des Steges (44) der Lasche (40) ein Stütznocken (48) angeformt ist, der beim Überlauf eines flach liegenden Kettenbügels über ein Kettenrad ein Verkanten verhindert.

6. Rundstahlkette nach Anspruch 5, dadurch gekennzeichnet, daß an der Lasche zwischen den Augen (43) eine Vertiefung (49) gebildet ist.

**Revendications**

1. Chaîne en acier rond avec étriers pour le montage d'éléments de convoyage avec les caractéristiques suivantes:

– les étriers servant au montage des éléments de convoyage ont une portion droite (11), à laquelle se rattachent, comme pour un maillon de chaîne ronde fermé, deux portions rondes (12), le côté longitudinal vis-à-vis de la portion droite étant toutefois fermé par une maille (20) qui sert d'appui à un élément de convoyage;

– deux portions droites parallèles (13) de l'étrier, prolongeant les portions rondes, sont reçues par des alésages dans la maille, et sont prolongés sous forme de boulons filetés (14) dépassant de la maille, et qui servent au vissage de l'élément de convoyage au moyen d'écrous;

– les portions (13) de l'étrier reçues par la maille ont une forme cylindrique avec une section non diminuée, et sont reçues par de grands alésages (21) dans la maille; caractérisée par les autres caractéristiques ci-après:

– à ces grands alésages (21) de la maille se raccordent de petit alésages (22) pour recevoir les boulons filetés;

– dans la maille, deux alésages transversaux (25) traversent chacun en partie un grand alésage (21) et reçoivent chacun une tige encastrée (26) qui est reçue dans la zone de pénétration par une fraisure (15) de la portion d'étrier cylindrique.

2. Chaîne en acier rond, selon la revendication 1, caractérisée en ce que la maille (20) concentrique aux alésages (21, 22), a la forme des yeux (23) reliés l'un à l'autre par une entretoise (24).

3. Chaîne en acier rond, selon la revendication 1, caractérisée en ce que les portions cylindriques (33) de l'étrier (30) sont en saillie vis-à-vis de la maille (40).

4. Chaîne en acier rond, selon la revendication 1, caractérisée en ce que l'étrier est limité intérieurement par une section semi-circulaire (32a), tandis que la limite extérieure (32b) est plate, uniforme ou en forme de toit.

5. Chaîne en acier rond selon la revendication 1, caractérisée en ce que, dans la zone de l'entretoise (44) de la maille (40) une came d'appui (48) est formée, qui empêche un coincement en cas de passage d'un étrier de chaîne plat sur une roue à chaîne.

6. Chaîne en acier rond, selon la revendication 5, caractérisée en ce qu'une empreinte (49) est formée dans la maille entre les yeux (43).

**Claims**

1. Round steel chain having brackets for the purpose of mounting conveying elements comprising the following features:

– the brackets serving for mounting the conveying elements have a straight portion (11) merging into two round portions (12), like in the case of a closed member of a round chain, the longitudinal side, however, which faces the straight portion, being closed by a strap (20) serving as an abutment for a conveying element;

– two straight, parallel portions (13) of the bracket which are continuations of the round portions are received in borings provided in the strap and are continued in the form of threaded bolts (14) projecting over the strap and serving to screw on the conveying element by means of nuts;

– the portions (13) of the bracket received by the strap have a cylindrical shape with an undiminished cross section and are received by large borings (21) provided in the strap:

characterized by the following further features:

– the large borings (21) of the strap are followed by small borings (22) for receiving the threaded bolts;

– two transversal borings (25) are formed in the strap which in each case penetrate a part of a large boring (21) and each receive a clamped in pin (26) which is received by a milled part (15) of the cylindrical portion of the bracket in the region of the penetration.

2. Round steel chain as claimed in claim 1, characterized in that the strap (20) concentrically arranged about the borings (21, 22) is designed in the shape of eyes (23) connected to one another by means of a web (24).

3. Round steel chain as claimed in claim 1, characterized in that the cylindrical portions (33) of the bracket (30) project over the strap (40).

4. Round steel chain as claimed in claim 1, characterized in that the bracket is limited at its inner side by a semi-circular cross section (32a), whereas the limitation (32b) is formed flat, plane or roof-shaped at the outer side.

5. Round steel chain as claimed in claim 1, characterized in that in the region of the web (44) of the strap (40) there is formed a supporting cam (48) which prevents canting when a flatly lying chain bracket passes over a chain wheel.

6. Round steel chain as claimed in claim 5, characterized in that at the strap there is formed a depression (49) between the eyes (43).

Fig. 1

Fig. 2

# Fig. 3

# Fig. 4

# Fig. 5

30

48

49

46

40

## Fig. 6

## Fig. 7

## Fig. 8

Fig. 9

45

X

48

44

47

45

43

XI

Fig. 11

41

42

49

48

XI

Fig. 10

48